(19)

Europäisches Patentamt
European Patent Office
Office européen des brevets

(11) **EP 2 903 376 B1**

(12) **EUROPEAN PATENT SPECIFICATION**

(45) Date of publication and mention
of the grant of the patent:
**18.05.2016 Bulletin 2016/20**

(21) Application number: **13842668.9**

(22) Date of filing: **26.08.2013**

(51) Int Cl.:
***H04W 72/04*** *(2009.01)*

(86) International application number:
**PCT/CN2013/082291**

(87) International publication number:
**WO 2014/048204 (03.04.2014 Gazette 2014/14)**

(54) **CONTROL CHANNEL ALLOCATION METHOD AND DEVICE**

VERFAHREN UND VORRICHTUNG ZUR ZUORDNUNG VON STEUERKANÄLEN

PROCÉDÉ ET DISPOSITIF D'ATTRIBUTION DE CANAL DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.09.2012 CN 201210370220**

(43) Date of publication of application:
**05.08.2015 Bulletin 2015/32**

(73) Proprietor: **ZTE Corporation
Shenzhen, Guangdong 518057 (CN)**

(72) Inventors:
• **ZHOU, Enhui
Shenzhen
Guangdong 518057 (CN)**

• **WANG, Hongjian
Shenzhen
Guangdong 518057 (CN)**

(74) Representative: **Modiano, Micaela Nadia
Modiano & Partners
Thierschstrasse 11
80538 München (DE)**

(56) References cited:
**EP-A1- 0 888 024      EP-A2- 1 727 387
WO-A1-93/21741      WO-A2-98/48580
CN-A- 101 188 863      CN-A- 102 301 810
CN-A- 102 378 376**

**Description**

**Technical Field**

The present invention relates to the field of mobile communications, including e.g., a method and device for allocating a control channel.

**Background**

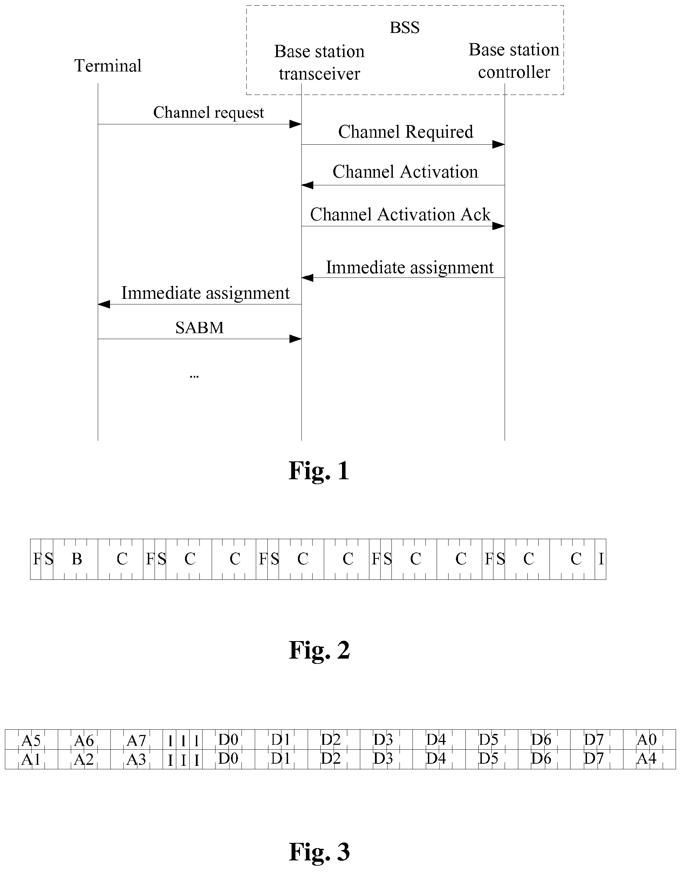

In the Global System of Mobile communication (GSM), when a Mobile Station (MS) intends to access a network to perform a circuit switching service, a base station usually allocates a (Stand-alone Dedicated Control Channel) SDCCH for the MS firstly, and then sends an immediate assignment message to the MS to told that the SDCCH have been allocated to the MS, as shown in Fig. 1. The MS accesses the SDCCH channel to begin to establish an L2 link and transmit signalling. According to the 3GPP TS45002 protocol, Access Grant Channel (AGCH) blocks bearing the immediate assignment messages may share all Common Control Channel (CCCH) blocks with Paging Channel (PCH) blocks bearing paging messages. Therefore, the immediate assignment message may be sent on any CCCH block.

Fig. 2 is a downlink multiframe structure of a combination of a Broadcast Control Channel (BCCH) + CCCH which is mostly used in a GSM cell, and the downlink multiframe is composed of 51 TDMA frames and is divided into 5 groups: the first group is F + S + B + C, herein F is a frequency correction Time Division Multiple Access (TDMA) frame, and S is a synchronization TDMA frame, and B is a BCCH block and C is a CCCH block; the second, third and fourth groups are all F + S + C + C, and a fifth group is F + S + C + C + N, and N is spare and plays a protection role. It can be seen from Fig. 2 that the 51 multiframe comprise 9 CCCH blocks, sequentially recorded as C0, C1, C2, ..., C8. Fig. 3 is a multiframe structure of an SDCCH channel which is mostly used in a GSM cell, which comprises totally 8 subchannels D0~D7.

As shown in Fig. 1, after receiving the immediate assignment message, the MS sends a Set Asynchronous Balanced Mode (SABM) frame for establishing an L2 link on an allocated SDCCH sub-channel. However, it can be seen by combining Fig. 2 and Fig. 3 that after receiving the immediate assignment message, the MS cannot immediately send the SABM frame, and should wait for the uplink frame moment of the allocated SDCCH sub-channel to come. However, the length of the waiting time is decided by the frame interval between the uplink frame moment of the SDCCH subchannel and the CCCH block bearing the immediate assignment message corresponding to the SDCCH sub-channel. For example, a network sends an immediate assignment message for allocating an SD0 sub-channel on the third CCCH block in the 51 multiframe, and it can be seen from Fig. 2 and Fig. 3 that, on receiving the immediate assignment message, the MS would send the SAMB only after waiting for 46 frames; however, if an SD3 sub-channel is allocated, the MS may send the SABM after waiting for 7 frames. It can be seen that it would cause different call setup time delays owing to selecting different CCCH blocks to send the immediate assignment message and allocating different SDCCH sub-channels for the MS.

In the existing technology, when a network sends an immediate assignment message and allocates an SDCCH sub-channel for a MS, it only needs to select a spare and available CCCH block and SDCCH sub-channel, and therefore, after receiving the immediate assignment message, the MS usually needs to wait for a long time to send an uplink SABM frame on the allocated SDCCH sub-channel, which causes a longer call setup time delay.

European patent application EP0888024 A1 discloses a method of establishing communication in a mobile radio systems. A mobile station sends a channel request message to the network. The network allocates a suitable SDCCH and informs the mobile station of the allocation by sending an an immediate assignment message. When the mobile station receives the immediate assignment, it initiates a layer 2 connection. While establishing the layer 2 connection, the mobile station sends a Set Asynchronous Balanced Mode, SABM, frame to the network.

**Summary**

A method and device for allocating control channel are provided in the present invention, so at least to shorten a call setup time delay.

According to one aspect of the embodiments of the present invention, a method for allocating a control channel is provided, comprising: receiving a channel request message sent by an MS; determining, according to a frame number of a frame on which the channel request message is received, a Stand-alone Dedicated Control Channel (SDCCH) subchannel to be allocated for the MS; and sending to the MS an immediate assignment message carrying information about the SDCCH sub-channel, so that the MS sends a Set Asynchronous Balanced Mode (SABM) frame used for establishing an L2 link on the SDCCH sub-channel.

According to an embodiment of the present invention, determining the SDCCH sub-channel to be allocated for the MS according to the frame number of the frame on which the channel request message is received comprises:

determining a block number C(x) of a Common Control Channel (CCCH) block used for sending the immediate assignment message according to the frame number of the frame on which the channel request message is received; and determining an available SDCCH sub-channel nearest to the CCCH block to be the SDCCH sub-channel allocated for the MS.

According to an embodiment of the present invention, determining the block number C(x) of the CCCH block used for sending the immediate assignment message according to the frame number of the frame on which the channel request message is received comprises: determining a block number of a nearest available CCCH block to be the C(x) according to the frame number of the frame on which the channel request message is received.

According to an embodiment of the present invention, determining the block number of the nearest available CCCH block to be the C(x) according to the frame number of the frame on which the channel request message is received comprises: comparing the numbers of pre-stored immediate assignment messages of all CCCH blocks in downlink multiframes to obtain a minimum number Lmin of the numbers of pre-stored immediate assignment messages; when there is only one CCCH block C(k) of which the number of pre-stored immediate assignment messages C(k)_pre = Lmin, letting C(x) = C(k); when Lmin ≥ 1, and there are at least two CCCH blocks of which the numbers of pre-stored immediate assignment messages are Lmin, letting the C(x) equal to a block number of an available CCCH block, which is nearest to the frame number of the frame on which the channel request message is received, in the at least two CCCH blocks corresponding to the Lmin; and when Lmin = 0, and there are at least two CCCH blocks of which the numbers of pre-stored immediate assignment messages are Lmin, pre-estimating an arriving frame number of the immediate assignment message, and letting the C(x) equal to a block number of an available CCCH block, which is nearest to the arriving frame number, in the at least two CCCH blocks corresponding to the Lmin.

According to an embodiment of the present invention, pre-estimating the arriving frame number of the immediate assignment message comprises: recording a frame number FN_IMM(i) of a frame on which an immediate assignment message is received at ith time, subtracting a frame number FN_RACH(i) of a frame on which the channel request message is received from the FN_IMM(i) to obtain an ith frame number interval ΔFN(i), wherein the frame number FN_RACH(i) is contained in the immediate assignment message; letting an pre-estimate interval ΔFN_pre(j) = MAX{ΔFN(j - N), ΔFN(j - N + 1),...,ΔFN(j - 1)}, where N is an integer not less than 2 and not greater than 10; and pre-estimating an arriving frame number FN_IMM_pre(j) = FN_RACH(j) + ΔFN_pre(j) for arrival of an immediate assignment message for the jth time.

According to another aspect of the embodiments of the present invention, a device for allocating control channel is provided, comprising: a receiving component, configured to receive a channel request message sent by an MS; a processing component, configured to determine, according to a frame number of the frame on which the channel request message is received, a Stand-alone Dedicated Control Channel (SDCCH) sub-channel to be allocated for the MS; and a sending component, configured to send to the MS an immediate assignment message carrying information about the SDCCH sub-channel, so that the MS sends a Set Asynchronous Balanced Mode (SABM) frame used for establishing an L2 link on the SDCCH sub-channel.

According to an embodiment of the present invention, the processing component comprises: a first processing element, configured to determine a block number C(x) of a Common Control Channel (CCCH) block used for sending the immediate assignment message according to the frame number of the frame on which the channel request message is received; and a second processing element, configured to determine an available SDCCH sub-channel nearest to the CCCH block to be the SDCCH sub-channel allocated for the MS.

According to an embodiment of the present invention, the first processing element is configured to determine a block number of a nearest available CCCH block to be the C(x) according to the frame number of the frame on which the channel request message is received.

According to an embodiment of the present invention, the first processing element is configured to compare the numbers of pre-stored immediate assignment messages of all CCCH blocks in downlink multiframes to obtain a minimum number Lmin of the numbers of pre-stored immediate assignment messages; when there is only one CCCH block C(k) of which the number of pre-stored immediate assignment messages C(k)_pre = Lmin, let C(x) = C(k); when Lmin ≥ 1, and there are at least two CCCH blocks of which the numbers of pre-stored immediate assignment messages are Lmin, let the C(x) equal to a block number of an available CCCH block, which is nearest to the frame number of the frame on which the channel request message is received, in the at least two CCCH blocks corresponding to the Lmin; and when Lmin = 0, and there are at least two CCCH blocks of which the numbers of pre-stored immediate assignment messages are Lmin, pre-estimate an arriving frame number of the immediate assignment message, and let the C(x) equal to a block number of an available CCCH block, which is nearest to the arriving frame number, in the at least two CCCH blocks corresponding to the Lmin.

According to an embodiment of the present invention, the first processing element is configured to record a frame number FN_IMM(i) of a frame on which an immediate assignment message is received at ith time, subtract a frame number FN_RACH(i) of a frame on which the channel request message is received from the FN_IMM(i) to obtain an ith frame number interval ΔFN(i), wherein the frame number FN_RACH(i) is contained in the immediate assignment message; let an pre-estimate interval ΔFN_pre(j) = MAX{ΔFN(j - N), ΔFN(j - N + 1),...,ΔFN(j - 1)}, where N is an integer not less than 2 and not greater than 10; and pre-estimate an arriving frame number FN_IMM_pre(j) = FN_RACH(j) + ΔFN_pre(j) for arrival of an immediate assignment message for the jth time.

In the solutions provided in the present invention, after receiving a channel request message of a MS, a Base Station Subsystem (BSS) selects an SDCCH sub-channel which can be used to send an uplink message with a fastest speed, then the base station subsystem activates the selected SDCCH sub-channel, and sends an immediate assignment message to the MS, and after receiving the immediate assignment message, the MS can send an SABM frame for establishing an L2 link on the selected SDCCH sub-channel. Compared with the related art, a most suitable SDCCH sub-channel for the MS is selected in the present invention instead of using any spare SDCCH sub-channel, which may reach the target of shortening the call setup time delay.

**Brief Description of the Drawings**

Drawings, provided for further understanding of the present invention and forming a part of the specification, are used to explain the present invention together with embodiments of the present invention rather than to limit the present invention. In the accompanying drawings:

> Fig. 1 is a flow schematic diagram of initial signalling of an MS accessing a network;
> Fig. 2 is a structure diagram of a BCCH + CCCH multiframe;
> Fig. 3 is a structure diagram of an SDCCH/8 multiframe;
> Fig. 4 is a flow schematic diagram of a method for allocating a control channel according to an embodiment of the present invention;
> Fig. 5 is a structure diagram of a device for allocating a control channel according to an embodiment of the present invention;
> Fig. 6 is a processing flow chart of a BTS on a channel request message in an embodiment of the present invention;
> Fig. 7 is a processing flow chart of a BSC on a consulting channel message in an embodiment of the present invention;
> Fig. 8 is a priority sequence diagram of allocating an SDCCH sub-channel in an embodiment of the present invention; and
> Fig. 9 is a processing flow chart of a BTS on an immediate assignment message in an embodiment of the present invention.

**Description of Embodiments**

For clearer description of the technical problem to be solved, technical solution and advantages of the embodiments of the disclosure, the disclosure will be described below in detail in conjunction with the drawings and embodiments. It should be noted that the embodiments and the characteristics of the embodiments can be combined with each other if there is no conflict.

With regard to the problem that in the related art, when a network sends an immediate assignment message and allocates an SDCCH sub-channel for a MS, it only needs to select a spare and available CCCH block and SDCCH sub-channel, and therefore, after receiving the immediate assignment message, the MS usually needs to wait for a long time to send an uplink SABM frame on the allocated SDCCH sub-channel, which causes a longer call setup time delay, a method and device for allocating control channel are provided in the present invention, which can shorten the call setup time delay.

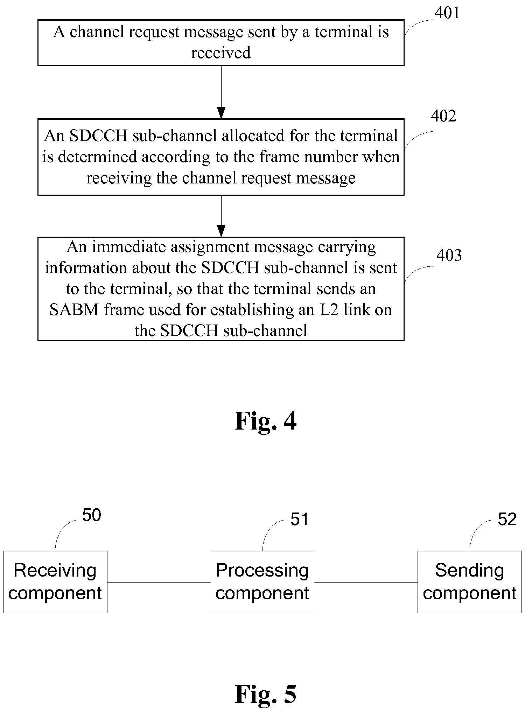

Fig. 4 is a flow schematic diagram of method for allocating control channel according to an embodiment of the present invention, and as shown in Fig. 4, the embodiment includes:

> step 401: A channel request message sent by an MS is received;
> step 402: An SDCCH sub-channel allocated for the MS is determined according to a frame number of the frame on which the channel request message is received; and
> step 403: The immediate assignment message carrying information about the SDCCH sub-channel is sent to the MS, so that the MS sends an SABM frame used for establishing an L2 link on the SDCCH sub-channel.

According to the embodiment of the present invention, the step 402 can comprise:

> a block number C(x) of a CCCH block used for sending the immediate assignment message is determined according to the frame number of the frame on which the channel request message is received; and
> an available SDCCH sub-channel nearest to the CCCH block is determined to be the SDCCH sub-channel allocated for the MS.

According to the embodiment of the present invention, determining the block number C(x) of the CCCH block used for sending the immediate assignment message according to the frame number of the frame on which the channel request message is received may comprise:

a block number of a nearest available CCCH block is determined to be the C(x) according to the frame number of the frame on which the channel request message is received.

According to the embodiment of the present invention, determining the block number of the nearest available CCCH block to be the C(x) according to the frame number of the frame on which the channel request message is received may comprise:

the numbers of pre-stored immediate assignment messages of all CCCH blocks in downlink multiframes are compared, and a minimum number a minimum number Lmin of the numbers of pre-stored immediate assignment messages is obtained;

when there is only one CCCH block C(k) of which the number of pre-stored immediate assignment messages C(k)_pre = Lmin, C(x) = C(k) is taken;

when Lmin $\geq$ 1, and there are at least two CCCH blocks of which the numbers of pre-stored immediate assignment messages are Lmin, the C(x) is let be equal to a block number of an available CCCH block, which is nearest to the frame number of the frame on which the channel request message is received, in the at least two CCCH blocks corresponding to the Lmin; and

when Lmin = 0, and there are at least two CCCH blocks of which the numbers of pre-stored immediate assignment messages are Lmin, the arriving frame number of the immediate assignment message is pre-estimated, and the C(x) is let be equal to a block number of an available CCCH block, which is nearest to the arriving frame number, in the at least two CCCH blocks corresponding to the Lmin.

According to the embodiment of the present invention, pre-estimating the arriving frame number of the immediate assignment message may comprise:

a frame number FN_IMM(i) of a frame on which an immediate assignment message is received at ith time is recorded, a frame number FN_RACH(i) of a frame on which the channel request message is received is subtracted from the FN_IMM(i) to obtain the ith frame number interval $\Delta$FN(i), wherein the frame number FN_RACH (i) is contained in the immediate assignment message;

an pre-estimate interval is let to be $\Delta$FN_pre(j) = MAX {$\Delta$FN(j - N), $\Delta$FN(j-N + 1), ..., $\Delta$FN(j - 1)}, where N is an integer not less than 2 and not greater than 10; and

an arriving frame number FN_IMM_pre(j) = FN_RACH(j) + $\Delta$FN_pre(j) for arrival of an immediate assignment message for the jth time is pre-estimated.

In the technical solution of the present invention, after receiving a channel request message of a MS, a base station subsystem finds a CCCH block which can be used to issue an immediate assignment message with regard to this access, and selects an SDCCH sub-channel which can send an uplink message with the fastest speed according to the position of the CCCH block; when the sub-channel has been occupied, a next channel nearest to the sub-channel according to a time sequence is selected; by analogy, the base station subsystem activates the selected SDCCH sub-channel, and sends the immediate assignment message to the MS on the CCCH block; and after receiving the immediate assignment message, the MS can send an SABM frame for establishing an L2 link on the selected SDCCH sub-channel.

Fig. 5 is a structure diagram of a device for allocating control channel according to an embodiment of the present invention, and as shown in Fig. 5, the embodiment includes:

a receiving component 50, configured to receive a channel request message sent by a MS;

a processing component 51, configured to determine, according to a frame number of a frame on which the channel request message is received, an SDCCH sub-channel allocated for the MS; and

a sending component 52, configured to send to the MS an immediate assignment message carrying information about the SDCCH sub-channel, so that the MS sends an SABM frame used for establishing an L2 link on the SDCCH sub-channel.

According to the embodiment of the present invention, the processing component 51 can comprise:

a first processing element, configured to determine a block number C(x) of a CCCH block used for sending the immediate assignment message according to the frame number of the frame on which the channel request message is received; and
a second processing element, configured to determine an available SDCCH sub-channel nearest to the CCCH block to be the SDCCH sub-channel allocated for the MS.

According to the embodiment of the present invention, the first processing element may be configured to determine a block number of a nearest available CCCH block to be the C(x) according to the frame number of the frame on which the channel request message is received.

According to the embodiment of the present invention, the first processing element may be configured to compare the numbers of pre-stored immediate assignment messages of all CCCH blocks in downlink multiframes to obtain a minimum number Lmin of the numbers of pre-stored immediate assignment messages; when there is only one CCCH block C(k) of which the number of pre-stored immediate assignment messages C(k)_pre = Lmin, let C(x) = C(k); when Lmin $\geq$ 1, and there are at least two CCCH blocks of which the numbers of pre-stored immediate assignment messages are Lmin, let the C(x) equal to a block number of an available CCCH block, which is nearest to the frame number of the frame on which the channel request message is received, in the at least two CCCH blocks corresponding to the Lmin; and when Lmin = 0, and there are at least two CCCH blocks of which the numbers of pre-stored immediate assignment messages are Lmin, pre-estimate an arriving frame number of the immediate assignment message, and let the C(x) equal to a block number of an available CCCH block, which is nearest to the arriving frame number, in the at least two CCCH blocks corresponding to the Lmin.

According to the embodiment of the present invention, the first processing element may be configured to record a frame number FN_IMM(i) of a frame on which an immediate assignment message is received at ith time, subtract a frame number FN_RACH(i) of a frame on which the channel request message is received from the FN_IMM(i) to obtain an ith frame number interval $\Delta$FN(i), wherein the frame number FN_RACH (i) is contained in the immediate assignment message; let an pre-estimate interval $\Delta$FN_pre(j) = MAX{$\Delta$FN(j - N), $\Delta$FN(j - N + 1),...,$\Delta$FN(j - 1)}, where N is an integer not less than 2 and not greater than 10; and pre-estimate an arriving frame number FN_IMM_pre(j) = FN_RACH(j) + $\Delta$FN_pre(j) for arrival of an immediate assignment message for the jth time.

In practical applications, the device for allocating the control channel in the embodiments of the present invention may be disposed in a base station subsystem; in particular, the receiving component 50 and the sending component 52 may be located in a base station transceiver, and a first processing element in a processing component 51 may be located in the base station transceiver, and a second processing element in the processing component 51 may be located in a base station controller.

In the technical solution of the present invention, after receiving the channel request message of the MS, the base station subsystem finds a CCCH block which can issue an immediate assignment message with regard to this access, and selects an SDCCH sub-channel which can be used to send an uplink message with the fastest speed according to the position of the CCCH block; when the sub-channel has been occupied, a next channel nearest to the sub-channel is selected according to a time sequence; by analogy, the base station subsystem activates the selected SDCCH sub-channel, and sends the immediate assignment message to the MS over the CCCH block; and after receiving the immediate assignment message, the MS can send an SABM frame for establishing an L2 link on the selected SDCCH sub-channel.

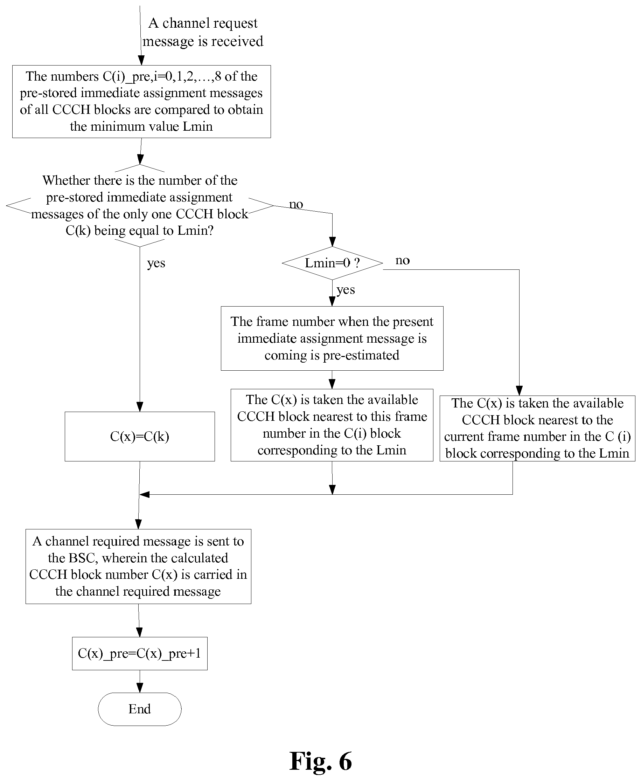

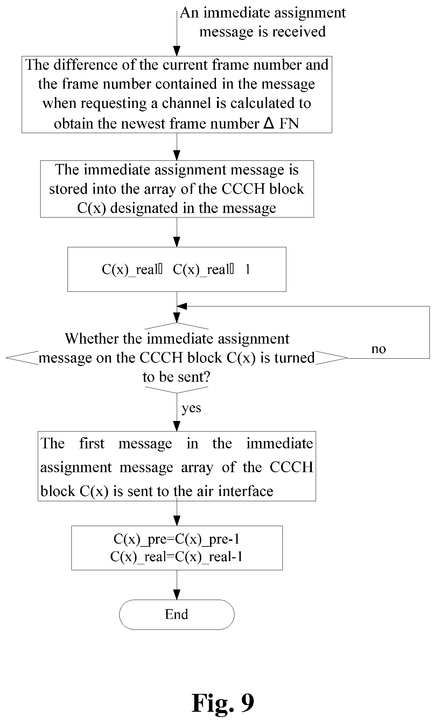

The method for allocating a control channel of the present invention will be described in detail in conjunction with Figs. 6-9:

In a BSS, usually a Base Station Controller (BSC) is responsible for allocating an SDCCH sub-channel, and a Base Transceiver System (BTS) is responsible for sending to an MS the immediate assignment message over different CCCH blocks. The BTS can establish an immediate assignment message array for each CCCH block and respectively count the number C(i)_real of the immediate assignment messages stored really and the number C(i)_pre, i = 0, 1, 2, ..., 8 of pre-stored immediate assignment messages in each immediate assignment message array.

It can be seen from Fig. 1 that with regard to the BTS, there is a certain time interval from receiving the channel request message from the MS to receiving the immediate assignment message sent by the BSC, which contains a channel activation process. In order to determine the CCCH block used to send the immediate assignment message, a time point of the immediate assignment message reaching the BTS is required to be pre-estimated, and the time point is pre-estimated by using the statistical measurement in the present embodiment: that is, the BTS records the frame number FN_IMM(i) of a frame on which the immediate assignment message is received at ith time, and a frame number FN_RACH(i) of a frame on which an MS request channel is received is subtracted from the FN_IMM(i), wherein the frame number FN_IMM(i) is contained in the immediate assignment message. The time interval $\Delta$FN_pre(j) = MAX{$\Delta$FN(j - N), $\Delta$FN(j - N + 1), ..., $\Delta$FN(j - 1)} is pre-estimated, and then the BTS pre-estimates the frame number FN_IMM_pre(j) = FN_RACH(j) + $\Delta$FN_pre(j) for the arrival of the immediate assignment message for the jth time, and a nearest and available CCCH block number can be obtained according to the frame number.

After receiving the channel request message of the MS, the BTS compares numbers of pre-stored immediate assignment messages of all CCCH blocks, as shown in Fig. 4, and when the minimum number of pre-stored immediate assignment messages of all CCCH blocks is Lmin, the CCCH block number $C(x)$ to be used by the immediate assignment message corresponding to the channel request message is determined according to the following several situations.

1. When there is only one CCCH block $C(k)$ of which the number of pre-stored immediate assignment messages $C(k)\_pre$ = Lmin, $C(x) = C(k)$ is taken;
2. When Lmin $\geq$ 1, and there are at least two CCCH blocks of which the numbers of pre-stored immediate assignment message are Lmin, the $C(x)$ is let be equal to the block number of an available CCCH block, which is nearest to a current frame number in the at least two $C(i)$ blocks corresponding to the Lmin; and
3. When Lmin = 0, and there is at least two CCCH blocks of which the numbers of pre-stored immediate assignment messages are Lmin, a time FN_RACH + $\Delta$FN_pre when the present immediate assignment message comes is firstly pre-estimated, then the $C(x)$ is let be equal to a block number of an available CCCH block nearest to the time in the at least two $C(i)$ blocks corresponding to the Lmin.

After determining the block number $C(x)$ of the CCCH to be used by the immediate assignment message corresponding to the channel request message, and when sending a consulting channel message to the BSC, the BTS carries the CCCH block number $C(x)$, and performs an adding 1 operation on the local $C(x)\_pre$.

After receiving the consulting channel message, as shown in Fig. 5, the BSC searches the priority sequence of the SDCCH sub-channels as shown in Fig. 6 according to the CCCH block number $C(x)$ carried therein, and the BSC preferably selects the SDCCH sub-channel with the highest priority corresponding to the $C(x)$, and when the SDCCH sub-channel has been occupied, then sequentially selects a spare SDCCH sub-channel with a secondary high priority. Specifically, as shown in Fig. 6, when $C(x) = C(2)$, then the BSC preferably selects a SDCCH sub-channel SD3 with the highest priority corresponding to $C(2)$, and when the SDCCH sub-channel has been occupied, then sequentially selects a spare SDCCH sub-channel SD4 with the secondary high priority.

When priority orders are allocated for SDCCH sub-channels, considering that it is required a certain time for an MS decoding an immediate assignment message and then adjusting transceiving configuration of its own to the designed SDCCH sub-channel, and therefore, a large amount of experiments is performed to acquire the time interval between the MS sending the SABM frame and receiving the immediate assignment message after different SDCCH sub-channels are allocated on a $C(i)$ block (i = 0, 1, 2, ..., 8), and the SDCCH sub-channels are ordered according to the length of the time interval, and specifically, the SDCCH sub-channel with a shortest time interval is of a highest priority, and the SDCCH sub-channel with a secondary shortest time interval is of a secondary high priority, and by analogy, the SDCCH sub-channel with a longest time interval is of a lowest priority.

The BSS activates a selected SDCCH sub-channel; the BSC sends to a BTS an immediate assignment message, carrying the CCCH block number $C(x)$ in the consulting channel message. The immediate assignment message sent to the BTS by the BSC may also not carry the $C(x)$, and when the $C(x)$ is not carried, then after the BTS determines the CCCH block number $C(x)$ to be used by the immediate assignment message corresponding to the channel request message, the BTS needs to save the $C(x)$.

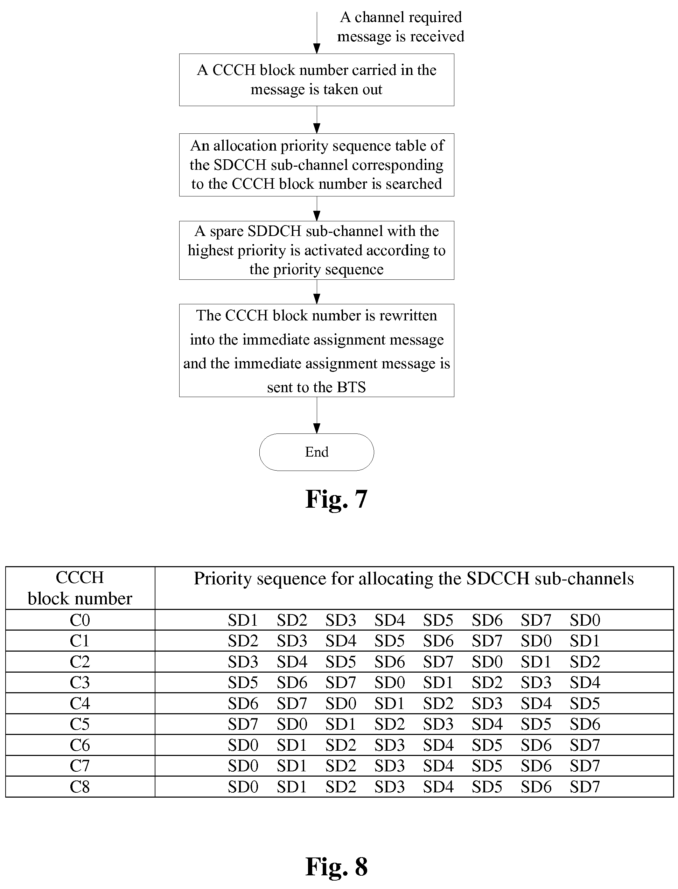

After receiving the immediate assignment message, as shown in Fig. 7, the BTS calculates a newest frame number interval $\Delta$FN according to the frame number of the immediate assignment message and the frame number when the MS requests a channel contained in the immediate assignment message, then puts the immediate assignment message into an array of the CCCH block $C(x)$ designated by the immediate assignment message or saved locally, and performs adding 1 operation on the local $C(x)\_real$.

After sending the immediate assignment message on the CCCH block $C(x)$, the BTS performs subtracting 1 operation simultaneously on the $C(x)\_pre$ and the $C(x)\_real$.

When the pre-estimate interval is calculated, the values of N may be flexibly selected according to the stable situation of a link time delay in the BSS system. In the present embodiment, the value range of N is from 2 to 10. When a link time delay is relatively stable, the value of N is relatively small; and when fluctuation of the link time delay is relatively large, the value of N can be increased appropriately. In sum, the frame number FN_IMM(i) of the pre-estimated immediate assignment message should be guaranteed to be slightly greater than the frame number as possible when the actual immediate assignment message is coming. When the frame number FN_IMM_pre(i) of the pre-estimated immediate assignment message is less than the frame number when the actual immediate assignment message is coming, it may cause that when the present immediate assignment message reaches the BTS, the BTS has missed the sending time designated in the CCCH block in the immediate assignment message, and then the BTS only can send the immediate assignment message to the MS over the designated CCCH block after delaying a 51 multiframe duration.

In the technical solution of the present invention, after receiving the channel request message of the MS, the BSS finds the CCCH block which can issue the immediate assignment message with regard to this access, and selects the SDCCH sub-channel which can be used to send an uplink message with the fastest speed according to the position of the CCCH block; when the sub-channel has been occupied, then a next channel nearest to the sub-channel is selected according to a time sequence; by analogy, the BSS activates the selected SDCCH sub-channel, and sends the immediate assignment message to the MS over the CCCH block; and after receiving the immediate assignment message, the MS can send an SABM frame for establishing an L2 link on the selected SDCCH sub-channel.

Compared with the related art, a most suitable SDCCH sub-channel is selected for the MS to use by means of the above-mentioned method in the present invention instead of using any spare SDCCH sub-channel, which may reach the target of shortening a call setup time delay.

Multiple functional units described in the description are called components so as to more particularly emphasize their implementation independence.

In the embodiments of the present invention, components can be realized by software so as to execute by various types of processors. For example, an executable component of an identifier can comprise one or more physical or logical blocks of a computer instruction, for example, it can be constructed to be an object, process or function. In spite of this, an executable code of the identifier component does not need to be located physically together, but can comprise different instructions stored on different physic, and when these instructions are logically combined together, they construct a component and realize a regulated target of the component.

Practically, the executable code component may be a single instruction or multiple instructions, and even can be distributed on different code segments and distributed on different programs as well as distributed across multiple storage devices. Likewise, operation data can be recognized in a component, and can be realized in any appropriate form and be organized in a data structure of any appropriate type. The operation data can be collected as a signal data set, or can be distributed at different positions (comprising on different storage devices), and may exist, at least partially, merely as electronic signals on a system or network.

When a component can be implemented by software, considering the level of existing hardware processes, so with regard to the component which can be implemented by the software, in the case of not considering costs, a person skilled in the art can set up a corresponding hardware circuit to realize corresponding functions, and the hardware circuit comprises a conventional very large scale integration (VLSI) circuit or a gate array and an existing semiconductor such as a logic chip and a transistor or other discrete elements. A component may also be implemented by programmable hardware devices such as field programmable gate arrays, programmable array logic and programmable logic devices.

In respective method embodiments of the disclosure, the serial numbers of steps cannot be used for defining the sequence of the steps, and the change of the sequence of the steps made by those skilled in the art without creative effort shall fall within the protection scope of the disclosure.

What mentioned above are the preferred embodiments of the disclosure, and it should be explained that various improvements or modifications can also be made by those skilled in the art within the principle of the disclosure and shall fall within the protection scope of the disclosure.

Industrial Applicability

By means of the technical solutions provided in the present invention, after receiving a channel request message of an MS, a BSS may select an SDCCH sub-channel which can be used to send an uplink message with a fastest speed, then the BSS activates the selected SDCCH sub-channel, and sends an immediate assignment message to the MS, and after receiving the immediate assignment message, the MS can send an SABM frame for establishing an L2 link on the selected SDCCH sub-channel, that is, the present invention selects a most suitable SDCCH sub-channel through the above-mentioned method for the MS to use instead of using any spare SDCCH sub-channel, and can shorten a call setup time delay.

**Claims**

1. A method for allocating a control channel, comprising:

    receiving a channel request message sent by a Mobile Station MS (401);
    determining, according to a frame number of a frame on which the channel request message is received, a Stand-alone Dedicated Control Channel, SDCCH, sub-channel to be allocated for the MS (402); and
    sending to the MS an immediate assignment message carrying information about the SDCCH sub-channel, so that the MS sends a Set Asynchronous Balanced Mode, SABM, frame used for establishing an L2 link on the SDCCH sub-channel (403).

2. The method for allocating the control channel according to claim 1, **characterized in that** determining the SDCCH sub-channel to be allocated for the MS

according to the frame number of the frame on which the channel request message is received comprises:

determining a block number C(x) of a Common Control Channel, CCCH, block used for sending the immediate assignment message according to the frame number of the frame on which the channel request message is received; and

determining an available SDCCH sub-channel nearest to the CCCH block to be the SDCCH sub-channel allocated for the MS.

3. The method for allocating the control channel according to claim 2, **characterized in that** determining the block number C[x] of the CCCH block used
for sending the immediate assignment message according to the frame number of the frame on which the channel request message is received comprises:

determining a block number of a nearest available CCCH block to be the C[x] according to the frame number of the frame on which the channel request message is received.

4. The method for allocating the control channel according to claim 3, **characterized in that** determining the block number of the nearest available CCCH block to be the C(x) according to the frame number of the frame on which the channel request message is received comprises:

comparing the numbers of pre-stored immediate assignment messages of all CCCH blocks in downlink multiframes to obtain a minimum number Lmin of the numbers of pre-stored immediate assignment messages;
when there is only one CCCH block C(k) of which the number of pre-stored immediate assignment messages $C(k)\_pre = Lmin$, letting $C(x) = C(k)$;
when $Lmin \geq 1$, and there are at least two CCCH blocks of which the numbers of pre-stored immediate assignment messages are Lmin, letting the C(x) equal to a block number of an available CCCH block, which is nearest to the frame number of the frame on which the channel request message is received, in the at least two CCCH blocks corresponding to the Lmin; and
when $Lmin = 0$, and there are at least two CCCH blocks of which the numbers of pre-stored immediate assignment messages are Lmin, pre-estimating an arriving frame number of the immediate assignment message, and letting the C(x) equal to a block number of an available CCCH block, which is nearest to the arriving frame number, in the at least two CCCH blocks corresponding to the Lmin.

5. The method for allocating the control channel according to claim 4, **characterized in that** pre-estimating the arriving frame number of the immediate assignment message comprises:

recording a frame number FN_IMM(i) of a frame on which an immediate assignment message is received at ith time, subtracting a frame number FN_RACH(i) of a frame on which the channel request message is received from the FN_IMM(i) to obtain an ith frame number interval $\Delta FN(i)$, wherein the frame number FN_RACH (i) is contained in the immediate assignment message;
letting an pre-estimate interval $\Delta FN\_pre(j) = MAX\{\Delta FN(j - N), \Delta FN(j - N + 1),..., \Delta FN(j - 1)\}$, where N is an integer not less than 2 and not greater than 10; and
pre-estimating an arriving frame number $FN\_IMM\_pre(j) = FN\_RACH(j) + \Delta FN\_pre(j)$ for arrival of an immediate assignment message for the jth time.

6. A device for allocating a control channel, comprising:

a receiving component, configured to receive a channel request message sent by a Mobile Station MS;
a processing component, configured to determine, according to a frame number of the frame on which the channel request message is received, a Stand-alone Dedicated Control Channel, SDCCH, sub-channel to be allocated for the MS; and
a sending component, configured to send to the MS an immediate assignment message carrying information about the SDCCH sub-channel, so that the MS sends a Set Asynchronous Balanced Mode, SABM, frame used for establishing an L2 link on the SDCCH sub-channel.

7. The device for allocating the control channel according to claim 6, **characterized in that** the processing component comprises:

a first processing element, configured to determine a block number C(x) of a Common Control Channel, CCCH, block used for sending the immediate assignment message according to the frame number of the frame on which the channel request message is received; and

a second processing element, configured to determine an available SDCCH sub-channel nearest to the CCCH block to be the SDCCH sub-channel allocated for the MS.

8. The device for allocating the control channel according to claim 7, **characterized in that**

the first processing element is configured to determine a block number of a nearest available CCCH block to be the C(x) according to the frame number of the frame on which the channel request message is received.

9. The device for allocating the control channel according to claim 8, **characterized in that**

the first processing element is configured to compare the numbers of pre-stored immediate assignment messages of all CCCH blocks in downlink multiframes to obtain a minimum number Lmin of the numbers of pre-stored immediate assignment messages; when there is only one CCCH block C(k) of which the number of pre-stored immediate assignment messages C(k)_pre = Lmin, let C(x) = C(k); when Lmin $\geq$ 1, and there are at least two CCCH blocks of which the numbers of pre-stored immediate assignment messages are Lmin, let the C(x) equal to a block number of an available CCCH block, which is nearest to the frame number of the frame on which the channel request message is received, in the at least two CCCH blocks corresponding to the Lmin; and when Lmin = 0, and there are at least two CCCH blocks of which the numbers of pre-stored immediate assignment messages are Lmin, pre-estimate an arriving frame number of the immediate assignment message, and let the C(x) equal to a block number of an available CCCH block, which is nearest to the arriving frame number, in the at least two CCCH blocks corresponding to the Lmin.

10. The device for allocating the control channel according to claim 9, **characterized in that**

the first processing element is configured to record a frame number FN_IMM(i) of a frame on which an immediate assignment message is received at ith time, subtract a frame number FN_RACH(i) of a frame on which the channel request message is received from the FN_IMM(i) to obtain an ith frame number interval $\Delta$FN(i), wherein the frame number FN_RACH (i) is contained in the immediate assignment message; let an pre-estimate interval $\Delta$FN_pre(j) = MAX{$\Delta$FN(j - N), $\Delta$FN(j - N + 1),...,$\Delta$FN(j - 1)}, where N is an integer not less than 2 and not greater than 10; and pre-estimate an arriving frame number FN_IMM_pre(j) = FN_RACH(j) + $\Delta$FN_pre(j) for arrival of an immediate assignment message for the jth time.

**Patentansprüche**

1. Ein Verfahren zur Zuordnung eines Steuerkanals, das Folgendes umfasst:

Empfangen einer Kanal-Anfragenachricht, gesendet von einem Mobilstation (Mobile Station, MS) (401);
Bestimmen, entsprechend einer Frame-Nummer eines Frames, auf dem die Kanal-Anfragenachricht empfangen wird, eines Stand-alone Dedicated Control Channels, SDCCH, Unterkanals, der dem MS (402) zuzuweisen ist; und
Senden einer Mitteilung über unmittelbare Zuteilung, die Informationen über den SDCCH-Unterkanal enthält, an das MS, so dass das MS einen Frame zum Setzen von Mischbetrieb (Set Asynchroner Balanced Mode), SABM, zum Aufbauen eines L2 Links auf dem SDCCH-Unterkanal (403) sendet.

2. Das Verfahren zur Zuordnung des Steuerkanals gemäß Anspruch 1, **dadurch gekennzeichnet, dass** das Bestimmen des SDCCH-Unterkanals, der dem MS entsprechend der Frame-Nummer des Frames, auf dem die Kanal-Anfragenachricht empfangen wird, zugewiesen wird, Folgendes umfasst:

Bestimmen einer Blocknummer C(x) eines Zentralsystem-Kanal-(Common Control Channel-, CCCH-)Blocks, der genutzt wird, um die Mitteilung über unmittelbare Zuteilung entsprechend der Frame-Nummer des Frames, auf dem die Kanal-Anfragenachricht empfangen wird, zu senden; und
Bestimmen eines verfügbaren SDCCH-Unterkanals, der dem CCCH-Block am nächsten ist, als SDCCH-Unterkanal, der dem MS zugewiesen wird.

**3.** Das Verfahren zur Zuordnung des Steuerkanals gemäß Anspruch 2, **dadurch gekennzeichnet, dass** das Bestimmen der Blocknummer C[x] des CCCH-Blocks, der genutzt wird, um die Mitteilung über unmittelbare Zuteilung entsprechend der Frame-Nummer des Frames, auf dem die Kanal-Anfragenachricht empfangen wird, zu senden, Folgendes umfasst:

Bestimmen einer Blocknummer eines nächsten verfügbaren CCCH-Blocks als C[x] entsprechend der Frame-Nummer des Frames, auf dem die Kanal-Anfragenachricht empfangen wird.

**4.** Das Verfahren zur Zuordnung des Steuerkanals gemäß Anspruch 3, **dadurch gekennzeichnet, dass** das Bestimmen der Blocknummer des nächsten verfügbaren CCCH-Blocks als C(x) entsprechend der Frame-Nummer des Frames, auf dem die Kanal-Anfragenachricht empfangen wird, Folgendes umfasst:

Vergleichen der Nummern zuvor gespeicherter Mitteilungen über unmittelbare Zuteilung aller CCCH-Blöcke in Abwärtsstrecken-Mehrfach-Frames, um eine Mindestnummer Lmin der Nummern zuvor gespeicherter Mitteilungen über unmittelbare Zuteilung zu erhalten;
wenn es nur einen CCCH-Block C(k) gibt, bei dem die Nummer zuvor gespeicherter Mitteilungen über unmittelbare Zuteilung C(k)_pre = Lmin, Gleichsetzen von C(x) = C(k);
wenn Lmin ≥ 1 und es mindestens zwei CCCH-Blöcke gibt, bei denen die Nummern zuvor gespeicherter Mitteilungen über unmittelbare Zuteilung Lmin sind, Gleichsetzen von C(x) mit einer Blocknummer eines verfügbaren CCCH-Blocks, der der Frame-Nummer des Frames, auf dem die Kanal-Anfragenachricht empfangen wird, am nächsten ist, in den mindestens zwei CCCH-Blöcken, die der Lmin entsprechen; und
wenn Lmin = 0 und es mindestens zwei CCCH-Blöcke gibt, bei denen die Nummern zuvor gespeicherter Mitteilungen über unmittelbare Zuteilung Lmin sind, Vorausschätzen der Nummer eines ankommenden Frames der Mitteilung über unmittelbare Zuteilung, und Gleichsetzen des C(x) mit einer Blocknummer eines verfügbaren CCCH-Blocks, die der Nummer des ankommenden Frames am nächsten ist, in den mindestens zwei CCCH-Blöcken, die der Lmin entsprechen.

**5.** Das Verfahren zur Zuordnung des Steuerkanals gemäß Anspruch 4, **dadurch gekennzeichnet, dass** das Vorausschätzen der Nummer des ankommenden Frames der Mitteilung über unmittelbare Zuteilung Folgendes umfasst:

Aufnehmen einer Frame-Nummer FN_IMM(i) eines Frames, auf dem eine Mitteilung über unmittelbare Zuteilung zum i-ten Zeitpunkt empfangen wird, Subtrahieren einer Frame-Nummer FN_RACH(i) eines Frames, auf dem die Kanal-Anfragenachricht empfangen wird, vom FN_IMM(i), um ein i-tes Frame-Nummer-Intervall ΔFN(i) zu erhalten, wobei die Frame-Nummer FN_RACH (i) in der Mitteilung über unmittelbare Zuteilung enthalten ist;
Gleichsetzen eines im Voraus geschätzten Intervalls ΔFN_pre(j) = MAX{ΔFN(j-N), ΔFN(j - N + 1),..., ΔFN(j-1) }, worin N eine ganze Zahl nicht kleiner als 2 und nicht größer als 10 ist; und
Vorausschätzen der Nummer eines ankommenden Frames FN_IMM_pre(j) = FN_RACH(j) + ΔFN_pre(j) zum Ankommen einer Mitteilung über unmittelbare Zuteilung zum j-ten Mal.

**6.** Eine Vorrichtung zur Zuordnung eines Steuerkanals, die Folgendes umfasst:

eine Empfangskomponente, ausgebildet, um eine Kanal-Anfragenachricht zu empfangen, die von einer Mobilstation MS gesendet wird;
eine Verarbeitungskomponente, ausgebildet, um entsprechend einer Frame-Nummer des Frames, auf dem die Kanal-Anfragenachricht empfangen wird, einen Stand-alone Dedicated Control Channel-, SDCCH-, Unterkanal zu bestimmen, der dem MS zuzuweisen ist; und
eine Sendekomponente, ausgebildet, um an das MS eine Mitteilung über unmittelbare Zuteilung zu senden, die Informationen über den SDCCH-Unterkanal enthält, so dass das MS einen Frame zum Setzen von Mischbetrieb (Set Asynchronous Balanced Mode, SABM) sendet, der genutzt wird, um auf dem SDCCH-Unterkanal eine L2-Verknüpfung zu erstellen.

**7.** Die Vorrichtung zur Zuordnung des Steuerkanals gemäß Anspruch 6, **dadurch gekennzeichnet, dass** die Verarbeitungskomponente Folgendes umfasst:

ein erstes Verarbeitungselement, ausgebildet, um eine Blocknummer C(x) eines zentralen Kontrollkanal- (Common Control Channel-, CCCH-) Blocks zu bestimmen, der genutzt wird, um die Mitteilung über unmittelbare Zuteilung entsprechend der Frame-Nummer des Frames, auf dem die Kanal-Anfragenachricht empfangen wird, zu senden; und

ein zweites Verarbeitungselement, ausgebildet, um einen verfügbaren SDCCH-Unterkanal, der dem CCCH-Block am nächsten liegt, dazu zu bestimmen, der SDCCH-Unterkanal zu sein, der dem MS zugewiesen ist.

8. Die Vorrichtung zur Zuordnung des Steuerkanals gemäß Anspruch 7, **dadurch gekennzeichnet, dass** das erste Verarbeitungselement ausgebildet ist, um eine Blocknummer eines nächsten verfügbaren CCCH-Blocks dazu zu bestimmen, der C(x) zu sein, entsprechend der Frame-Nummer des Frames, auf dem die Kanal-Anfragenachricht empfangen wird.

9. Die Vorrichtung zur Zuordnung des Steuerkanals gemäß Anspruch 8, **dadurch gekennzeichnet, dass** das erste Verarbeitungselement ausgebildet ist, um die Nummern zuvor gespeicherter Mitteilungen über unmittelbare Zuteilung aller CCCH-Blöcke in Abwärtsstrecken-Mehrfach-Frames zu vergleichen, um eine Mindestnummer Lmin der Nummern zuvor gespeicherter Mitteilungen über unmittelbare Zuteilung zu erhalten; wenn es nur einen CCCH-Block C(k) gibt, bei dem die Nummer zuvor gespeicherter Mitteilungen über unmittelbare Zuteilung C(k)_pre = Lmin ist, dann C(x) = C(k) zu setzen; wenn Lmin ≥ 1 und es mindestens zwei CCCH-Blöcke gibt, bei denen die Nummern zuvor gespeicherter Mitteilungen über unmittelbare Zuteilung Lmin sind, dann C(x) mit einer Blocknummer eines verfügbaren CCCH-Blocks gleichzusetzen, der der Frame-Nummer des Frames, auf dem die Kanal-Anfragenachricht empfangen wird, am nächsten ist, in den mindestens zwei CCCH-Blöcken, die mit Lmin korrespondieren; und wenn Lmin = 0 und es mindestens zwei CCCH-Blöcke gibt, bei denen die Nummern zuvor gespeicherter Mitteilungen über unmittelbare Zuteilung Lmin sind, Vorausschätzung der Nummer eines ankommenden Frames der Mitteilung über unmittelbare Zuteilung, und Gleichsetzen des C(x) mit einer Blocknummer eines verfügbaren CCCH-Blocks, die der Nummer des ankommenden Frames am nächsten ist, in den mindestens zwei CCCH-Blöcken, die der Lmin entsprechen.

10. Die Vorrichtung zur Zuordnung des Steuerkanals gemäß Anspruch 9, **dadurch gekennzeichnet, dass** das erste Verarbeitungselement ausgebildet ist, um eine Frame-Nummer FN_IMM(i) eines Frames, auf dem eine Mitteilung über unmittelbare Zuteilung zum i-ten Zeitpunkt empfangen wird, aufzunehmen, eine Frame-Nummer FN_RACH(i) eines Frames, auf dem die Kanal-Anfragenachricht empfangen wird, vom FN_IMM(i) zu subtrahieren, um ein i-tes Frame-Nummer-Intervall ΔFN(i) zu erhalten, wobei die Frame-Nummer FN_RACH (i) in der Mitteilung über unmittelbare Zuteilung enthalten ist; ein im Voraus geschätztes Intervall

$$\Delta FN\_pre(j) = MAX\{\Delta FN(j-N), \Delta FN(j - N + 1),...,\Delta FN(j-1)\}$$

sein zu lassen, worin N eine ganze Zahl nicht kleiner als 2 und nicht größer als 10 ist; und eine Nummer eines ankommenden Frames FN_IMM_pre(j) = FN_RACH(j) + ΔFN_pre(j) zum Ankommen einer Mitteilung über unmittelbare Zuteilung zum j-ten Mal vorauszuschätzen.

## Revendications

1. Procédé d'attribution d'un canal de commande, comprenant:

la réception d'un message de demande de canal envoyé par une station mobile MS (401);
la détermination, en fonction d'un numéro de trame d'une trame sur laquelle le message de demande de canal est reçu, un sous-canal du Canal de Contrôle Autonome Spécialisé, SDCCH, sous-canal à attribuer à la MS (402); et
l'envoi à la MS d'un message d'affectation immédiate portant des informations relatives au sous-canal SDCCH, de sorte que la MS envoie une Trame d'Etablissement du Mode Asynchrone Symétrique, SABM, utilisée pour établir une liaison L2 sur le sous-canal SDCCH (403).

2. Méthode d'attribution du canal de commande selon la revendication 1, **caractérisée en ce que** la détermination du sous-canal SDCCH à attribuer pour la MS en fonction du numéro de trame de la trame sur laquelle le message de demande de canal est reçu comprend:

la détermination d'un numéro de bloc C(x) d'un bloc de Canal de Commande Commun, CCCH, utilisé pour envoyer le message d'affectation immédiate en fonction du numéro de trame de la trame sur laquelle le message de demande de canal est reçu; et

la détermination d'un sous-canal SDCCH disponible le plus proche du bloc CCCH pour être le sous-canal SDCCH attribué à la MS.

3. Méthode d'attribution du canal de commande selon la revendication 2, **caractérisée en ce que** la détermination du numéro de bloc C(x) du bloc CCCH utilisé pour envoyer le message d'affectation immédiate en fonction du numéro de trame de la trame sur laquelle le message de demande de canal est reçu comprend:

la détermination d'un numéro de bloc d'un bloc CCCH le plus proche disponible pour être le C(x) en fonction du numéro de trame de la trame sur laquelle le message de demande de canal est reçu.

4. Méthode d'attribution du canal de commande selon la revendication 3, **caractérisée en ce que** la détermination du numéro de bloc du bloc CCCH le plus proche disponible pour être le C(x) en fonction du numéro de trame de la trame sur laquelle le message de demande de canal est reçu comprend :

la comparaison des numéros des messages d'affectation immédiate pré-enregistrés de tous les blocs CCCH dans des multi-trames de liaisons descendantes pour obtenir un numéro minimum Lmin des numéros des messages d'affectation immédiate pré-enregistrés;
quand il n'y a qu'un seul bloc CCCH C(k) dont le numéro des messages d'affectation immédiate pré-enregistrés C(k)_pre = Lmin, laissant C(x) = C(k);
quand Lmin $\geq$ 1, et qu'il y a au moins deux blocs CCCH dont les numéros des messages d'affectation immédiate pré-enregistrés sont Lmin, laissant le C(x) égal à un numéro de bloc d'un bloc CCCH disponible, qui est le plus proche du numéro de trame de la trame sur laquelle le message de demande de canal est reçu, dans les au moins deux blocs CCCH correspondant au Lmin; et
quand Lmin=0, et qu'il y a au moins deux blocs CCCH, dont les numéros des messages d'affectation immédiate pré-enregistrées sont Lmin, pré-estimant un numéro de trame arrivant du message d'affectation immédiate, et laissant le C(x) égal à un numéro de bloc d'un bloc CCCH disponible, qui est le plus proche du numéro de trame arrivant, dans les au moins deux blocs CCCH correspondant au Lmin.

5. Méthode d'attribution du canal de commande selon la revendication 4, **caractérisée en ce que** la pré-estimation du numéro de trame arrivant du message d'affectation immédiate comprend:

l'enregistrement d'un numéro de trame FN_IMM(i) d'une trame sur laquelle un message d'affectation immédiate est reçu à l'instant i-ième, en soustrayant un numéro de trame FN_RACH(i) d'une trame sur laquelle le message de demande de canal est reçu du FN_IMM(i) pour obtenir un intervalle de numéro de trame i-ième $\Delta$FN(i), dans lequel le numéro de trame FN_RACH(i) est contenu dans le message d'affectation immédiate;
en laissant un intervalle de pré-estimation $\Delta$FN_pre(j) = MAX{$\Delta$FN(j-N), $\Delta$FN (j-N+1), ..., $\Delta$FN (j-1)}, où N est un entier non inférieur à 2 et non supérieur à 10; et
la pré-estimation d'un numéro de trame arrivant FN_IMM_pre(j) = FN_RACH(j) + $\Delta$FN_pre(j) pour l'arrivée d'un message d'affectation immédiate pour le moment j-ième.

6. Dispositif pour l'attribution d'un canal de commande, comprenant:

un composant de réception, configuré pour recevoir un message de demande de canal envoyé par une Station Mobile MS;
un composant de traitement, configuré pour déterminer, en fonction d'un numéro de trame de la trame sur laquelle le message de demande de canal est reçu, un sous-canal du Canal de Contrôle Autonome Spécialisé, SDCCH, à attribuer à la MS; et
un composant émetteur, configuré pour envoyer à la MS un message d'affectation immédiate portant des informations relatives au sous-canal SDCCH, de sorte que la MS envoie une Trame d'Etablissment du Mode Asynchrone Symétrique, SABM, utilisée pour établir une liaison L2 sur le sous-canal SDCCH.

7. Dispositif pour l'attribution du canal de commande selon la revendication 6, **caractérisé en ce que** le composant de traitement comprend:

un premier élément de traitement, configuré pour déterminer un numéro de bloc C(x) d'un bloc de Canal de Commande Commun, CCCH, bloc utilisé pour envoyer le message d'affectation immédiate en fonction du numéro de trame de la trame sur laquelle le message de demande de canal est reçu; et
un deuxième élément de traitement, configuré pour déterminer un sous-canal SDCCH disponible le plus proche du bloc CCCH pour être le sous-canal SDCCH attribué à la MS.

8. Dispositif pour l'attribution du canal de commande selon la revendication 7, **caractérisé en ce que**

le premier élément de traitement est configuré pour déterminer un numéro de bloc d'un bloc CCCH le plus proche disponible pour être le C(x) en fonction du numéro de trame de la trame sur laquelle le message de demande de canal est reçu.

9. Dispositif pour l'attribution du canal de commande selon la revendication 8, **caractérisé en ce que**

le premier élément de traitement est configuré pour comparer les numéros des messages d'affectation immédiate pré-enregistrés de tous les blocs CCCH dans des multi-trames de liaisons descendantes pour obtenir un numéro minimum Lmin des numéros des messages d'affectation immédiate pré-enregistrés; quand il n'y a qu'un seul bloc de CCCH C(k) dont le numéro des messages d'affectation immédiate préenregistrés C(k)_pre = Lmin, laisser C(x) = C(k); lorsque Lmin $\geq$ 1, et qu'il y a au moins deux blocs CCCH dont les numéros des messages d'affectation immédiate préenregistrés sont Lmin, laisser le C(x) égal à un numéro de bloc d'un bloc CCCH disponible, qui est le plus proche du numéro de trame de la trame sur laquelle le message de demande de canal est reçu, dans les au moins deux blocs CCCH correspondant au Lmin; et quand Lmin = 0, et qu'il y a au moins deux blocs CCCH dont les numéros des messages d'affectation immédiate pré-enregistrés sont Lmin, la pré-estimation d'un numéro de trames arrivant du message d'affectation immédiate, et laisser le C(x) égal à un numéro de bloc d'un bloc CCCH disponible, qui est le plus proche du numéro de trame arrivant, dans les au moins deux blocs CCCH correspondant au Lmin.

10. Dispositif pour l'attribution du canal de commande selon la revendication 9, **caractérisé en ce que**

le premier élément de traitement est configuré pour enregistrer un numéro de trame FN_IMM(i) d'une trame sur laquelle un message d'affectation immédiate est reçu au temps i-ième, soustraire un numéro de trame FN_RACH(i) d'une trame sur laquelle le message de demande de canal est reçu en provenance du FN_IMM (i) pour obtenir un intervalle i-ième de numéro de trame $\Delta$FN (i), dans lequel le numéro de trame FN_RACH(i) est contenu dans le message d'affectation immédiate; laisser un intervalle de pré-estimation $\Delta$FN_pre(j) = MAX $\{\Delta$FN (j - N), $\Delta$FN(j - N + 1), ..., $\Delta$FN(j - 1)$\}$, où N est un entier non inférieur à 2 et non supérieur à 10; et pré-estimer un numéro de trame arrivant FN_IMM_pre(j) = FN_RACH(j) + $\Delta$FN_pre(j) pour l'arrivée d'un message d'affectation immédiate pour le moment j-ième.

**Fig. 1**

**Fig. 2**

**Fig. 3**

401

A channel request message sent by a terminal is received

402

An SDCCH sub-channel allocated for the terminal is determined according to the frame number when receiving the channel request message

403

An immediate assignment message carrying information about the SDCCH sub-channel is sent to the terminal, so that the terminal sends an SABM frame used for establishing an L2 link on the SDCCH sub-channel

**Fig. 4**

50

Receiving component

51

Processing component

52

Sending component

**Fig. 5**

A channel request
message is received

The numbers C(i)_pre,i=0,1,2,...,8 of the
pre-stored immediate assignment messages
of all CCCH blocks are compared to obtain
the minimum value Lmin

Whether there is the number of the
pre-stored immediate assignment
messages of the only one CCCH block
C(k) being equal to Lmin?

no

Lmin=0 ?

no

yes

yes

The frame number when the present
immediate assignment message is
coming is pre-estimated

C(x)=C(k)

The C(x) is taken the available
CCCH block nearest to this frame
number in the C(i) block
corresponding to the Lmin

The C(x) is taken the available
CCCH block nearest to the
current frame number in the C (i)
block corresponding to the Lmin

A channel required message is sent to
the BSC, wherein the calculated
CCCH block number C(x) is carried in
the channel required message

C(x)_pre=C(x)_pre+1

End

**Fig. 6**

A channel required
message is received

↓

A CCCH block number carried in the
message is taken out

↓

An allocation priority sequence table of
the SDCCH sub-channel corresponding
to the CCCH block number is searched

↓

A spare SDDCH sub-channel with the
highest priority is activated according to
the priority sequence

↓

The CCCH block number is rewritten
into the immediate assignment message
and the immediate assignment message is
sent to the BTS

↓

End

**Fig. 7**

| CCCH block number | Priority sequence for allocating the SDCCH sub-channels | | | | | | | |
|---|---|---|---|---|---|---|---|---|
| C0 | SD1 | SD2 | SD3 | SD4 | SD5 | SD6 | SD7 | SD0 |
| C1 | SD2 | SD3 | SD4 | SD5 | SD6 | SD7 | SD0 | SD1 |
| C2 | SD3 | SD4 | SD5 | SD6 | SD7 | SD0 | SD1 | SD2 |
| C3 | SD5 | SD6 | SD7 | SD0 | SD1 | SD2 | SD3 | SD4 |
| C4 | SD6 | SD7 | SD0 | SD1 | SD2 | SD3 | SD4 | SD5 |
| C5 | SD7 | SD0 | SD1 | SD2 | SD3 | SD4 | SD5 | SD6 |
| C6 | SD0 | SD1 | SD2 | SD3 | SD4 | SD5 | SD6 | SD7 |
| C7 | SD0 | SD1 | SD2 | SD3 | SD4 | SD5 | SD6 | SD7 |
| C8 | SD0 | SD1 | SD2 | SD3 | SD4 | SD5 | SD6 | SD7 |

**Fig. 8**

An immediate assignment
message is received

The difference of the current frame number and
the frame number contained in the message
when requesting a channel is calculated to
obtain the newest frame number Δ FN

The immediate assignment message is
stored into the array of the CCCH block
C(x) designated in the message

C(x)_real▯ C(x)_real▯ 1

Whether the immediate assignment
message on the CCCH block C(x) is turned          no
to be sent?

yes

The first message in the immediate
assignment message array of the CCCH
block C(x) is sent to the air interface

C(x)_pre=C(x)_pre-1
C(x)_real=C(x)_real-1

End

# Fig. 9

**EP 2 903 376 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0888024 A1